(19) Europäisches Patentamt
European Patent Office
Office européen des brevets

(11) **EP 2 714 319 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(51) Int Cl.:
***B06B 3/00*** *(2006.01)*     ***B23K 20/10*** *(2006.01)*
***B29C 65/08*** *(2006.01)*

(21) Anmeldenummer: **12726778.9**

(22) Anmeldetag: **29.05.2012**

(86) Internationale Anmeldenummer:
**PCT/EP2012/060056**

(87) Internationale Veröffentlichungsnummer:
**WO 2012/163919 (06.12.2012 Gazette 2012/49)**

(54) **ULTRASCHALLSCHWEISSVORRICHTUNG MIT DREHKOPPLER**

ULTRASONIC WELDING DEVICE WITH ROTARY COUPLER

DISPOSITIF DE SOUDURE PAR ULTRASONS COMPRENANT UN COUPLEUR ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2011 DE 102011076712**

(43) Veröffentlichungstag der Anmeldung:
**09.04.2014 Patentblatt 2014/15**

(73) Patentinhaber: **Herrmann Ultraschalltechnik GmbH & Co. KG**
**76307 Karlsbad (DE)**

(72) Erfinder: **JURZITZA, Dieter**
**76131 Karlsruhe (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
EP-A1- 0 680 060     EP-A2- 1 157 752
WO-A1-2008/156116     DE-A1- 4 103 569
US-A1- 2007 125 829     US-A1- 2010 158 307

**Beschreibung**

Die vorliegende Erfindung betrifft eine Ultraschallschweißvorrichtung mit einem Generator zur Erzeugung einer hochfrequenten Wechselspannung, einem Konverter zum Umwandeln der Wechselspannung in eine mechanische Ultraschallschwingung und einer Sonotrode zur Übertragung der Ultraschallschwingung auf ein zu bearbeitendes Material. Hierbei sind Konverter und Sonotrode drehbar und zwischen Generator und Konverter ist ein Drehkoppler eingefügt. Der Drehkoppler dient zur Übertragung von elektrischer Energie von einer stehenden auf eine rotierende Anordnung mit einem stationären Element und einem gegenüber dem stationären Element drehbaren Element. Das stationäre Element weist einen Primärkreis mit zwei Eingangsanschlüssen, die über eine erste Spule mit N Windungen miteinander verbunden sind auf, und das drehbare Element einen Sekundärkreis mit zwei Ausgangsanschlüssen, die über eine zweite Spule mit M Windungen miteinander verbunden sind, wobei die erste und die zweite Spule derart angeordnet sind, dass, wenn an die Eingangsanschlüsse eine Wechselspannung angelegt wird, das von der Spule erzeugte Magnetfeld an der zweiten Spule eine Wechselspannung induziert.

Insbesondere bei einer Ultraschallschweißvorrichtung, bei der die Sonotrode und der gegebenenfalls über ein Amplitudentransformator mit der Sonotrode fest verbundene Konverter während der Bearbeitung rotieren, müssen die von dem im Allgemeinen stationär angeordneten Generator erzeugte Wechselspannungssignale zu dem sich drehenden Konverter übertragen werden.

Derzeit kommen zu diesem Zweck hauptsächlich elektromechanische Systeme zum Einsatz. Hierbei wird häufig ein Quecksilberbad verwendet, um die Kontakte zwischen dem stationären Element und dem drehbaren Element unabhängig vom eingestellten Drehwinkel zu machen.

Dieses Verfahren hat den Nachteil, dass die insbesondere für Ultraschallanwendungen notwendigen hohen Konverterspannungen nicht mehr im Spezifikationsbereich üblicher Drehkoppler liegen. Weiterhin ist diese Technik insbesondere bei höheren Drehzahlen nicht mehr einsetzbar, da dann keine zuverlässige Kontaktierung mehr gewährleistet ist.

Weiterhin gibt es Anordnungen, die mit Kontaktbürsten oder Schleifringen arbeiten.

Die US 2010/0158307 A1 beschreibt ein Ultraschallspindelsystem mit einer Empfangsspule, die mit einem Konverter verbunden ist, wobei die Empfangsspule koaxial von einer Übertragungsspule umgeben ist. Ein vorbestimmtes, von einer Ultraschallantriebsvorrichtung zum Betreiben des Konverters ausgegebenes elektrisches Signal wird der Übertragungsspule zugeführt. Das vorbestimmte elektrische Signal kann dem Konverter mittels der Empfangsspule durch elektromagnetische Induktion zwischen der Übertragungsspule und der Empfangsspule zugeführt werden.

In der EP 1 157 752 A2 findet sich ein Werkzeuggerät mit einem Ultraschalladapter mit einem an einen elektrischen Ultraschallfrequenzgenerator angeschlossenen kapazitiven elektroakustischen Wandler zur Erzeugung von Ultraschallwellen für ein Werkzeug, wobei der kapazitive elektroakustische Wandler mit einer Sekundärwicklung und der Ultraschallfrequenzgenerator mit einer Primärwicklung eines Transformators verbunden ist.

Des Weiteren beschreibt die WO 2008/156116 A1 eine Schneid- oder Schleifvorrichtung mit einem rohrförmigen Gehäuse, einem drehbaren Schaft, der in dem Gehäuse mittels eines Lagers gestützt wird, einem stabförmigen Werkzeug zum Schneiden oder Schleifen, das mittels einer Werkzeughaltevorrichtung gehalten wird, einem Ultraschallkonverter, der an dem Werkzeughalteabschnitt oder dem stabförmigen Werkzeug vorgesehen ist und einer elektrischen Energiequelle, die mit dem Ultraschallkonverter elektrisch verbunden ist. Die elektrische Verbindung zwischen dem Ultraschallkonverter und der elektrischen Energiequelle wird mittels eines Drehtransformators ausgeführt. Der Drehtransformator weist eine Zuführvorrichtung für elektrische Energie und eine Empfangsvorrichtung für elektrische Energie auf.

Ausgehend von dem beschriebenen Stand der Technik ist es daher Aufgabe der vorliegenden Erfindung, eine Ultraschallschweißvorrichtung mit einem Drehkoppler bereitzustellen, der insbesondere für Ultraschallanwendungen geeignet ist, d.h. der bei hohen Frequenzen und hohen Drehzahlen zuverlässig Signale überträgt und bei dem eine Signalübertragung ohne Veränderung von Amplitude und/oder Phase möglich ist.

Erfindungsgemäß wird diese Aufgabe dadurch gelöst, dass der Primärkreis und/oder der Sekundärkreis einen Kompensationskondensator aufweist, welcher parallel oder in Reihe zu der ersten oder zweiten Spule geschaltet ist.

Die Kopplung zwischen dem stationären und dem drehbaren Element erfolgt somit rein induktiv.

In einer bevorzugten Ausführungsform weisen sowohl das stationäre Element als auch das drehbare Element einen Kernabschnitt auf, wobei die Windungen der ersten Spule um eine erste Wicklungsachse auf dem Kernabschnitt des stationären Elementes aufgewickelt sind, während die Windungen der zweiten Spule um eine zweite Wicklungsachse auf dem Kernabschnitt des drehbaren Elementes aufgewickelt sind.

Die Kernabschnitte bestehen vorzugsweise aus einem hochpermeablen Material, am besten aus Ferrit. Dadurch wird die magnetische Kopplung zwischen dem Primärkreis und dem Sekundärkreis vergrößert.

In einer bevorzugten Ausführungsform schließen die erste und die zweite Wicklungsachse einen Winkel $\alpha$ ein, der größer als 90°, vorzugsweise größer als 150°, besonders bevorzugt größer als 170° ist, wobei am besten die beiden Wicklungsachsen aufeinander liegen.

Auch durch diese Maßnahme wird die Kopplung zwischen Primär- und Sekundärkreis weiter verstärkt.

Es hat sich als vorteilhaft erwiesen, wenn die erste oder die zweite Wicklungsachse auf der Drehachse des rotierenden Elementes liegt. Am besten liegen sogar beide Wicklungsachsen auf der Drehachse des rotierenden Elementes, um die Winkelabhängigkeit des Kopplers auf einfache Weise zu reduzieren.

In einer besonders bevorzugten Ausführungsform besteht das stationäre Element und/oder das drehbare Element aus einer im Wesentlichen rotationssymmetrischen Halbschale. Die erste bzw. die zweite Spule ist dann in der jeweiligen Halbschale angeordnet. Am besten weist die Halbschale einen sich vom Schalenboden im Wesentlichen senkrecht erstreckenden Kernabschnitt auf, um den die Windungen der Spule gewickelt sind.

Am besten bestehen sowohl das stationäre Element als auch das drehbare Element aus solch einer Halbschale, die derart angeordnet sind, dass die Kernabschnitte zueinander gewandt sind.

Durch solch eine Anordnung ist die Übertragung der elektrischen Signale weitestgehend unabhängig von dem Drehwinkel. Die Kernabschnitte sind vorzugsweise zylindersymmetrisch und weisen keine seitlichen Einschnitte auf, um die Drehwinkelabhängigkeit der magnetischen Eigenschaften zu minimieren.

In einen weiteren bevorzugten Ausführungsform ist vorgesehen, dass der Drehkoppler eine Einrichtung zur Verstellung des Abstandes zwischen dem stationären Element und dem drehbaren Element aufweist. Da die Hauptinduktivität des Primärkreises von dem Abstand abhängt, kann sie mit Hilfe einer solchen Vorrichtung eingestellt werden. Insbesondere bei der Verwendung eines solchen Drehkopplers für Ultraschallanwendungen kann somit der Abstand derart klein eingestellt werden, dass die Hauptinduktivität mindestens 5-mal, vorzugsweise mindestens 10-mal größer ist als die interne Induktivität des verwendeten Ultraschallgenerators. In diesem Fall sind Rückwirkungen des Drehkopplers auf den Generator vernachlässigbar.

Da eine Verringerung des Abstandes die primäre Hauptinduktivität vergrößert, verringert sich die Rückwirkung auf den Generator mit dem Abstand des stationären Elementes vom drehbaren Element. Je geringer der Abstand der beiden Elemente jedoch ist, umso höhere Anforderungen werden an die Lagerung der beiden Elemente insbesondere bei hohen Drehzahlen gestellt.

Bei dem beschriebenen Drehkoppler ist immer eine Streuinduktivität $L_s$ vorhanden, die aufgrund der Trennung der Primärwicklung von der Sekundärwicklung in zwei unterschiedlichen Kammern der Halbschale und aufgrund deren Scheibenform nicht vernachlässigbar ist. Um den Einfluss des Drehkopplers auf das zu übertragende Signal möglichst gering zu halten, ist vorgesehen, dass der Primärkreis und/oder der Sekundärkreis einen Kompensationskondensator aufweist, welcher parallel oder in Reihe zu der ersten oder zweiten Spule geschaltet ist. Falls sowohl im Primärkreis als auch im Sekundärkreis ein Kompensationskondensator vorgesehen ist, so sind deren Kapazitäten vorzugsweise gleich zu wählen. Insbesondere dann, wenn das Übersetzungsverhältnis nicht Eins ist, können jedoch auch ungleiche Kapazitäten von Vorteil sein.

Die Kompensationskapazität $C_k$ berechnet sich

zu $C_K = \dfrac{1}{\omega^2 L_S}$ mit der Kreisfrequenz w und der

Streuinduktivität $L_s$, wobei w=2πf mit der Arbeitsfrequenz f.

Dabei bezeichnet $L_S$ die Streuinduktivität und f die Arbeitsfrequenz, d.h. im Falle der Verwendung des Drehkopplers in einer Ultraschallanwendung die Frequenz des Generators. Die Verwendung eines Kompensationskondensators ist eine Möglichkeit die Streuinduktivität $L_S$ zu kompensieren. Andere Kompensationskreise wären ebenfalls denkbar.

Mit Vorteil liegt das Verhältnis von M zu N zwischen 0,75 und 15, vorzugsweise zwischen 0,9 und 1,1, besonders bevorzugt bei etwa 1 und beträgt am besten genau 1.

In einer bevorzugten Ausführungsform ist die Hauptinduktivität des Drehkopplers mindestens 5 mal, vorzugsweise mindestens 10 mal größer ist als die Induktivität des Generators. Dadurch wird sichergestellt, dass die Hauptinduktivität nicht kompensiert werden muss. Eine Erfassung des Amplitudenstroms ist dann ohne weiteres möglich, da dieser nicht durch den Drehkoppler beeinflusst wird.

Der Generator kann dann die Amplitude der Ultraschall-Schwingung basierend auf einer hierzu proportionalen Größe im elektrischen System regeln. Dies ist ein großer Vorteil für die Zuverlässigkeit der Gesamtanordnung.

In der bevorzugten Ausführungsform des Drehkopplers mit großer Hauptinduktivität ist dieser im Wesentlichen ohne Rückwirkung auf den Generator. Der erfindungsgemäße Drehkoppler stellt sicher, dass kein Unterschied bezüglich der Betriebssicherheit des Generators entsteht. Das Risiko einer Beschädigung von Konverter bzw. Sonotrode wird minimiert.

Weiterhin ist in einer besonders bevorzugten Ausführungsform vorgesehen, dass die Hauptinduktivität derart gewählt wird, dass sie als interne Induktivität des Generators zur Erzeugung einer hochfrequenten Wechselspannung wirkt. Mit anderen Worten weist der Generator keine parallel geschaltete Spule auf. Die Aufgabe der üblicherweise vorhandenen parallel geschalteten Spule übernimmt die Hauptinduktivität des Drehkopplers. Im Grunde genommen kann ein derart modifizierter Generator nur zusammen mit dem Drehkoppler seine Funktion erfüllen. Dadurch kann der Generator kostengünstiger hergestellt werden. Allerdings kann dann der Drehkoppler nicht mehr mit allen handelsüblichen Generatoren verwendet werden, da die Hauptinduktivität des Drehkopplers hierfür zu gering ist.

Weitere Vorteile, Merkmale und Anwendungsmöglichkeiten werden deutlich anhand der folgenden Beschreibung einer bevorzugten Ausführungsform sowie den zugehörigen Figuren. Es zeigen:

> Figuren 1 a und 1 b perspektivische Ansichten einer Ausführungsform des Drehkopplers,
> Figur 2 eine Schnittansicht durch die in den Figuren 1 a und 1 b gezeigte Ausführungsform,
> Figur 3 ein T- Ersatzschaltbild des erfindungsgemäßen Drehkopplers und
> Figur 4 ein Pi-Ersatzschaltbild des erfindungsgemäßen Drehkopplers.

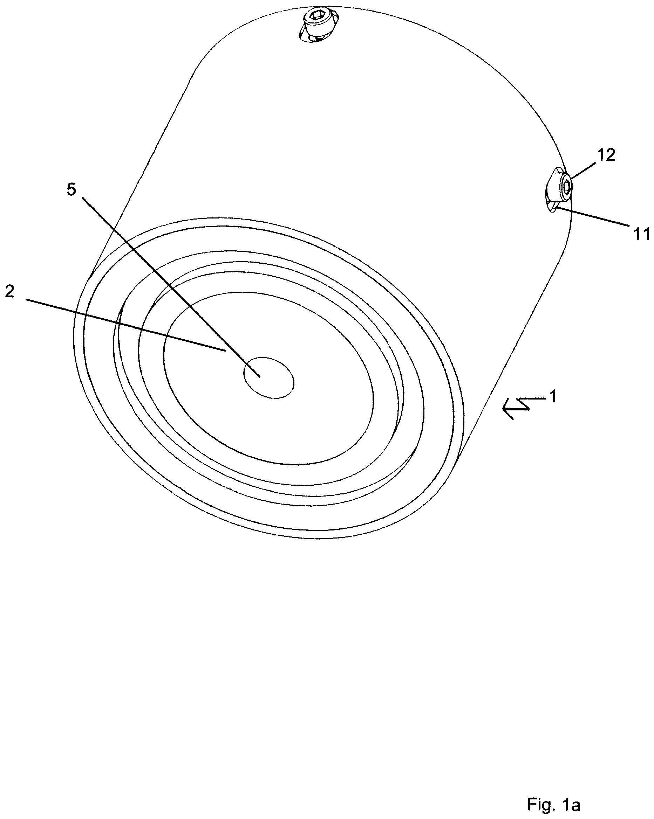

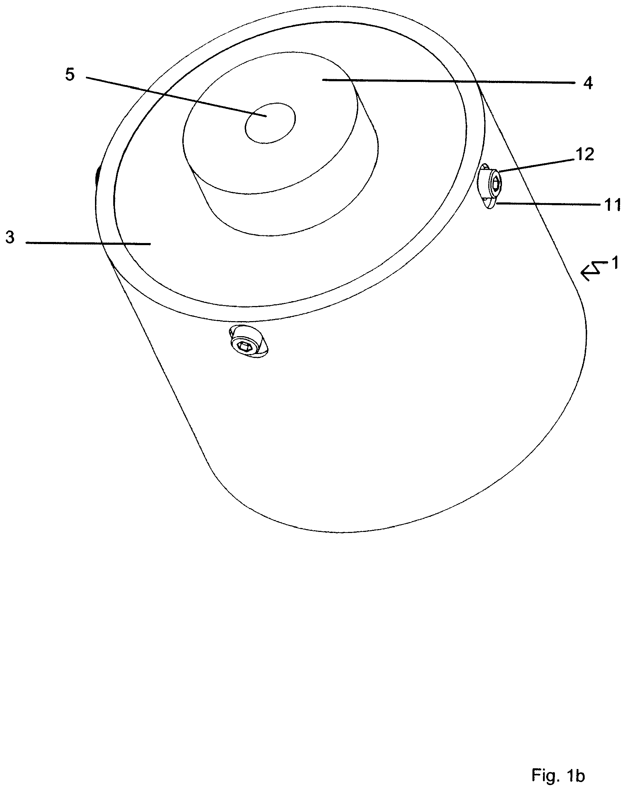

In den Figuren 1a und 1b sind perspektivische Ansichten eines erfindungsgemäßen Drehkopplers 1 gezeigt. Figur 1 a zeigt eine Ansicht auf den stationären Teil 2, während Figur 1b eine Ansicht auf den drehbaren Teil 3 zeigt. Ebenfalls zu erkennen ist ein Kanal 5, der sich durch den Drehkoppler, d.h. durch das drehbare Teil 3 und das stationäre Teil 2 erstreckt, über den Medien wie z. B. Kühlmittel zugeführt werden können. Der drehbare Teil 3 weist einen Anschlusszapfen 4 auf.

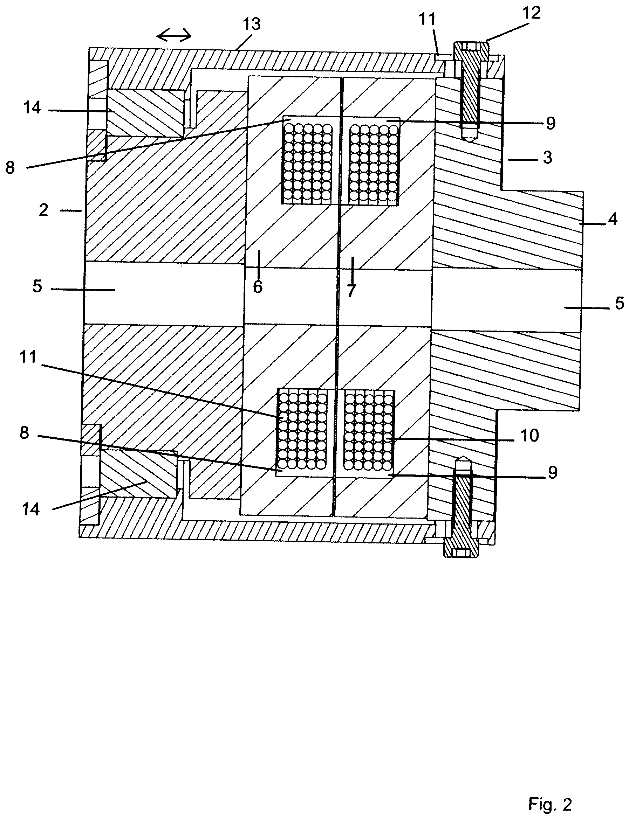

Wie in der Schnittansicht von Figur 2 am besten zu erkennen ist, besteht der Drehkoppler aus einem stationären Teil 2 und einem drehbaren Teil 3. Beide Teile sind jeweils als Kernhalbschale 6,7 ausgeführt. Die Halbschalen weisen einen Kernabschnitt auf, der hohlzylinderförmig ausgebildet ist und keine seitlichen Einschnitte aufweist.

Auf dem Kernabschnitt sind jeweils eine geeignete Zahl Windungen 10,11 Wickeldraht aufgebracht, wobei der Wicklungswiderstand je Wicklung möglichst klein ist. Der Transformatorkern ist aus hochpermeablen Material, vorzugsweise aus Ferrit, hergestellt.

Die beiden Halbschalen 6,7 sind rotationssymmetrisch ausgebildet und weisen jeweils einen im wesentlichen ringförmigen Wickelraum 8,9 auf.

In jeden der Wickelräume 8,9 der Halbschalen 6,7 ist ein Wickelkörper, vorzugsweise aus hochtemperaturfestem Kunststoff, eingelegt. Jeder Wickelkörper ist mit einer Anzahl Windungen bewickelt. Im Allgemeinen ist die Anzahl der Windungen in beiden Wickelkörpern identisch, wobei jedoch auch Anwendungsfälle denkbar sind, bei denen sich die Windungszahl der beiden Wickelkörper unterscheidet.

Beide Halbschalen 6,7 werden so zueinander positioniert, dass sich die magnetischen Eigenschaften der Anordnung nicht ändern, wenn das drehbare Element 3,7 relativ zum stationären Element 2,6 gedreht wird. Die Windungszahl sollte mindestens so groß sein, dass bei den zu erwartenden Signalamplituden und -frequenzen der Kern nicht in die Sättigung ausgesteuert wird.

Der Abstand der beiden Halbschalen zueinander wird so eingestellt, dass sich eine primäre Hauptinduktivität des Drehkopplers einstellt, die möglichst mindestens 5 bis 10 mal größer ist als die interne Induktivität des mit den Eingangsanschlüssen verbundenen Generators. Durch diese Maßnahme sind die Rückwirkungen des Drehkopplers auf den Generator vernachlässigbar.

Um den Abstand der beiden Halbschalen zueinander einzustellen, ist eine Einstellvorrichtung vorgesehen. Diese besteht aus einem Langloch 11, das in dem Hülsenteil 13 ausgebildet ist, und einer Schraube 12, welche durch das Langloch 11 in eine Gewindebohrung im drehbaren Teil eingreift. Die Ausführung als Langloch 11 ermöglicht, dass das drehbare Teil 3, an dem die Kernhalbschale 7 befestigt ist, relativ zum Hülsenteil 13 in Pfeilrichtung bewegt werden kann, sodass der Abstand zwischen den beiden Halbschalen 6, 7 eingestellt werden kann. Das Hülsenelement 13 dreht sich zusammen mit dem drehbaren Teil 3 gegenüber dem stationären Teil 2. Daher sind entsprechende Lager 14 vorgesehen.

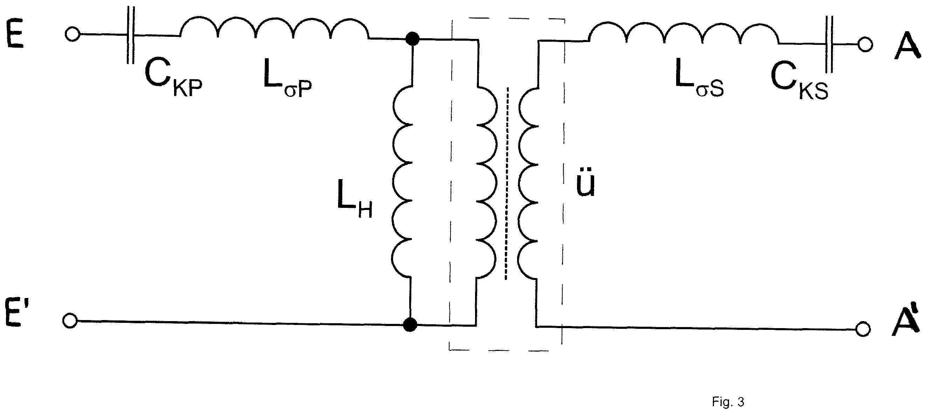

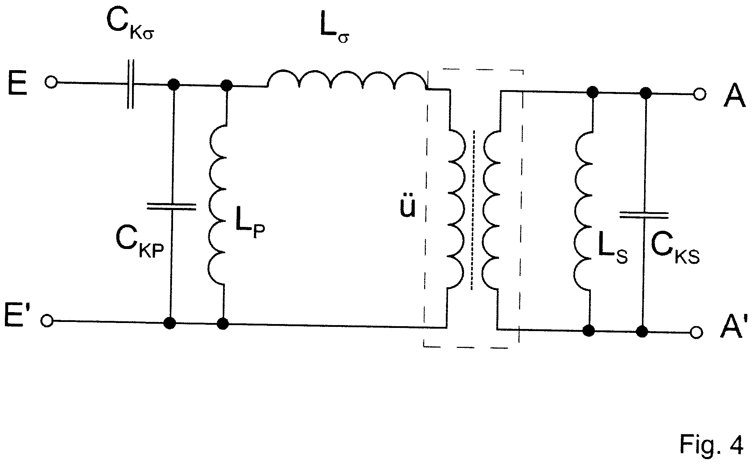

Die Figuren 3 und 4 zeigen zwei äquivalente Ersatzschaltbilder des erfindungsgemäßen Drehkopplers, wobei Figur 3 ein T-Ersatzschaltbild und Figur 4 ein Pi-Ersatzschaltbild darstellt.

Der Drehkoppler weist zwei Eingangsanschlüsse E, E' und zwei Ausgangsanschlüsse A, A' auf.

Der Drehkoppler setzt sich in Figur 3 aus den Streuinduktivitäten $L_{\sigma S}$ (sekundärseitig), $L_{\sigma P}$ (primärseitig) und einer Hauptinduktivität $L_H$ zusammen. Die galvanische Trennung erfolgt über den idealen Übertrager mit der Übersetzung ü, die in der bevorzugten Ausführungsform gleich Eins ist.

Aufgrund der Aufbautechnik beträgt die Streuinduktivität etwa 5 % bis 10 % der primären Hauptinduktivität. Die Streuinduktivität ist nahezu unabhängig von der Größe des Luftspaltes zwischen dem stationären Element und dem drehbaren Element. Da die Streuinduktivitäten $L_{\sigma S}$ (sekundärseitig), $L_{\sigma P}$ (primärseitig) die Energieübertragung vom Generator zum Konverter verschlechtern, ist die Kompensation der Streuinduktivität erforderlich. Dies erfolgt mit Hilfe der Kompensationskondensatoren $C_{KP}$ (primärseitig) und $C_{KS}$ (sekundärseitig), welche zu den Spulen in Reihe geschaltet sind.

Die bisherige Beschreibung des Drehkopplers bezieht sich immer auf das T-Ersatzschaltbild, wie es in Figur 3 gezeigt ist.

Der Vollständigkeit halber wird jedoch darauf hingewiesen, dass der erfindungsgemäße Drehkoppler auch in Form eines Pi-Ersatzschaltbildes dargestellt werden kann. In diesem Bild teilt sich die Hauptinduktivität in die beiden Teilinduktivitäten $L_P$ und $L_S$ auf. Es ist hier nur eine Streuinduktivität $L_\sigma$ vorhanden. Die Kompensation der Streuinduktivität erfolgt dann mit Hilfe der parallel angeordneten Kondensatoren $C_{KP}$ und $C_{KS}$ und mit der in Reihe geschalteten Kapazität $C_{K\sigma}$.

Die Impedanz des Kompensationsnetzwerkes wird so gewählt, dass es mindestens bei der Betriebsfrequenz $F_0$, z.B. 30 kHz, sicherstellt, dass sie betragsmäßig mit der Impedanz der Streuinduktivität übereinstimmt, jedoch das entgegengesetzte Vorzeichen hat, sodass die Impedanz der Streuinduktivität kompensiert wird.

**Patentansprüche**

1. Ultraschallschweißvorrichtung mit einem Generator zur Erzeugung einer hochfrequenten Wechselspannung, einem Konverter zum Umwandeln der Wechselspannung in eine mechanische Ultraschallschwingung und einer Sonotrode zur Übertragung der Ultraschallschwingung auf ein zu bearbeitendes Material, wobei Konverter und Sonotrode drehbar sind und zwischen Generator und Konverter ein Drehkoppler (1) zur Übertragung von elektrischer Energie von einer stehenden auf eine rotierende Anordnung mit einem stationären Element (2) und einem gegenüber dem stationären Element (2) drehbaren Element (3) angeordnet ist, wobei das stationäre Element (2) einen Primärkreis mit zwei Eingangsanschlüssen, die über eine erste Spule mit N Windungen (11) miteinander verbunden sind, und das drehbare Element (3) einen Sekundärkreis mit zwei Ausgangsanschlüssen, die über eine zweite Spule mit M Windungen (10) miteinander verbunden sind, aufweist, wobei die erste und die zweite Spule derart angeordnet sind, dass, wenn an die Eingangsanschlüsse eine Wechselspannung angelegt wird, das von der ersten Spule erzeugte Magnetfeld in der zweiten Spule eine Wechselspannung induziert, **dadurch gekennzeichnet, dass** der Primärkreis und/oder der Sekundärkreis einen Kompensationskondensator aufweist, welcher parallel oder in Reihe zu der ersten oder zweiten Spule geschaltet ist.

2. Ultraschallschweißvorrichtung nach Anspruch 1, **dadurch gekennzeichnet, dass** das stationäre Element (2) und/oder das drehbare Element (3) aus einer im wesentlichen rotationssymmetrischen Halbschale (6, 7) besteht, wobei die erste und/oder die zweite Spule in der jeweiligen Halbschale (6, 7) angeordnet sind, wobei vorzugsweise die Halbschale (6, 7) einen sich vom Schalenboden im wesentlichen senkrecht erstreckenden Kernabschnitt aufweist.

3. Ultraschallschweißvorrichtung nach einem der Ansprüche 1 bis 2, **dadurch gekennzeichnet, dass** eine Einrichtung zur Verstellung des Abstandes zwischen dem stationären Element (2) und dem drehbaren Element (3) vorgesehen ist.

4. Ultraschallschweißvorrichtung nach einem der Ansprüche 1 bis 3, **dadurch gekennzeichnet, dass** der Kompensationskondensator eine Kapazität $C_K$ aufweist, die sich zu $C_K = \dfrac{1}{\omega^2 L_S}$ berechnet, mit der Kreisfrequenz w und der Streuinduktivität $L_S$.

5. Ultraschallschweißvorrichtung nach einem der Ansprüche 1 bis 4, **dadurch gekennzeichnet, dass** das Verhältnis von N/M zwischen 0,75 und 1,5, vorzugsweise zwischen 0,9 und 1,1, besonders bevorzugt etwa 1 und am besten genau 1 beträgt.

6. Ultraschallschweißvorrichtung nach einem der Ansprüche 1 bis 5, **dadurch gekennzeichnet, dass** die Hauptinduktivität des Drehkopplers (1) mindestens 5 mal, vorzugsweise mindestens 10 mal größer ist als die Induktivität des Generators.

7. Ultraschallschweißvorrichtung nach einem der Ansprüche 1 bis 6, **dadurch gekennzeichnet, dass** der Generator zu Erzeugung einer hochfrequenten Wechselspannung keine parallel geschaltete Spule aufweist und die Hauptinduktivität des Drehkopplers (1) als Induktivität des Generators dient.

8. Ultraschallschweißvorrichtung nach einem der Ansprüche 1 bis 7, **dadurch gekennzeichnet, dass** sowohl das stationäre Element (2) als auch das drehbare Element (3) einen Kernabschnitt aufweisen, wobei die Windungen (11) der ersten Spule um eine erste Wicklungsachse auf dem Kemabschnitt des stationären Element (2) aufgewickelt sind, während die Windungen (10) der zweiten Spule um eine zweite Wicklungsachse auf dem Kernabschnitt des drehbaren Elementes (3) aufgewickelt sind, wobei die erste und die zweite Wicklungsachse einen Winkel $\alpha$ einschließen, der größer als 90°, vorzugsweise größer als 150°, besonders bevorzugt größer als 170° einschließt und am besten identisch sind.

**Claims**

1. An ultrasonic welding device having a generator for generating a high frequency ac voltage, a converter for converting the ac voltage into a mechanical ultrasonic vibration and a sonotrode for transmitting the ultrasonic vibration to a material to be worked, wherein the converter and the sonotrode are rotatable and a rotary coupler (1) is arranged between the generator and the converter for the transmission of electric energy from a stationary arrangement to a rotating arrangement, with a stationary element (2) and an element (3) which is rotatable relative to the stationary element (2), wherein the stationary element (2) has a primary circuit with two input terminals which are connected together by way of a first coil with N turns (11) and the rotatable element (3) has a secondary circuit with two output terminals which are connected together by way of a second coil with M turns (10), wherein the first and second coils are so arranged that when an ac voltage is applied to the input terminals the magnetic field generated by the first coil induces an ac voltage in the second coil, **characterised in that** the primary circuit and/or the secondary circuit has a compensation capacitor connected in parallel or in series in relation to the first or second coil.

2. An ultrasonic welding device as set forth in claim 1 **characterised in that** the stationary element (2) and/or the rotatable element (3) comprises a substantially rotationally symmetrical half-shell (6, 7), wherein the first and/or the second coil are arranged in the respective half-shell (6, 7), wherein preferably the half-shell (6, 7) has a core portion extending substantially perpendicularly from the shell bottom.

3. An ultrasonic welding device as set forth in one of claims 1 and 2 **characterised in that** there is provided a device for adjusting the spacing between the stationary element (2) and the rotatable element (3).

4. An ultrasonic welding device as set forth in one of claims 1 through 3 **characterised in that** the compensation capacitor has a capacitance $C_K$ which is calculated as, $C_K = \dfrac{1}{\omega^2 L_s}$, with the circular frequency $\omega$ and the leakage inductance $L_s$.

5. An ultrasonic welding device as set forth in one of claims 1 through 4 **characterised in that** the ratio of N/M is between 0.75 and 1.5, preferably between 0.9 and 1.1, particularly preferably about 1 and best precisely 1.

6. An ultrasonic welding device as set forth in one of claims 1 through 5 **characterised in that** the main inductance of the rotary coupler (1) is at least 5 times, preferably at least 10 times, greater than the inductance of the generator.

7. An ultrasonic welding device as set forth in one of claims 1 through 6 **characterised in that** the generator for generating a high frequency ac voltage does not have a parallel-connected coil and the main inductance of the rotary coupler (1) serves as the inductance of the generator.

8. An ultrasonic welding device as set forth in one of claims 1 through 7 **characterised in that** both the stationary element (2) and also the rotatable element (3) have a core portion, wherein the turns (11) of the first coil are wound around a first winding axis on the core portion of the stationary element (2) while the turns (10) of the second coil are wound around a second winding axis on the core portion of the rotatable element (3), wherein the first and second winding axes include an angle $\alpha$ which is greater than 90°, preferably greater than 150°, particularly preferably greater than 170°, and is best identical.

**Revendications**

1. Dispositif de soudure par ultrasons pourvu d'un générateur servant à générer une tension alternative haute fréquence, d'un convertisseur servant à convertir la tension alternative en une vibration ultrasonore mécanique et d'une sonotrode servant à transmettre la vibration ultrasonore sur un matériau à usiner, le convertisseur et la sonotrode étant rotatifs et un coupleur rotatif (1) destiné à transmettre l'énergie électrique d'un dispositif immobile sur un dispositif tournant étant disposé entre le générateur et le convertisseur, le dispositif tournant présentant un élément fixe (2) et un élément rotatif (3) par rapport à l'élément fixe (2), l'élément fixe (2) comportant un circuit primaire doté de deux raccordements d'entrée qui sont reliés entre eux par une première bobine présentant N tours (11), et l'élément rotatif (3) comportant un circuit secondaire doté de deux raccordements de sortie qui sont reliés entre eux par une deuxième bobine présentant M tours (10), la première et la deuxième bobine étant disposées de telle manière que, lorsqu'une tension alternative est appliquée sur les raccordements d'entrée, le champ magnétique généré par la première bobine induit une tension alternative dans la deuxième bobine, **caractérisé en ce que** le circuit primaire et/ou le circuit secondaire comprennent un condensateur de compensation, lequel est monté en parallèle ou en série par rapport à la première ou à la deuxième bobine.

2. Dispositif de soudure par ultrasons selon la revendication 1, **caractérisé en ce que** l'élément fixe (2) et/ou l'élément rotatif (3) sont constitués d'une demi-coque (6, 7) sensiblement à symétrie de révolution, la première et/ou la deuxième bobines étant agencées dans la demi-coque (6, 7) respective, la demi-coque (6, 7) comprenant de préférence une partie centrale s'étendant sensiblement verticalement à partir du fond de la coque.

3. Dispositif de soudure par ultrasons selon l'une quelconque des revendications 1 à 2, **caractérisé en ce qu'**un système de réglage de la distance entre l'élément fixe (2) et l'élément rotatif (3) est prévu.

4. Dispositif de soudure par ultrasons selon l'une quelconque des revendications 1 à 3, **caractérisé en ce que** le condensateur de compensation présente une capacité $C_K$, qui se calcule $C_K = \dfrac{1}{\omega^2 L_s}$, $\omega$ étant la fréquence du circuit et $L_S$ l'inductance de fuite.

5. Dispositif de soudure par ultrasons selon l'une quelconque des revendications 1 à 4, **caractérisé en ce que** le rapport N/M est compris entre 0,75 et 1,5, de préférence entre 0,9 et 1,1, de manière particulièrement préférée d'environ 1 et idéalement exactement 1.

6. Dispositif de soudure par ultrasons selon l'une quelconque des revendications 1 à 5, **caractérisé en ce que** l'inductance principale du coupleur rotatif (1) est au moins 5 fois, de préférence au moins 10 fois supérieure à l'inductance du générateur.

7. Dispositif de soudure par ultrasons selon l'une quelconque des revendications 1 à 6, **caractérisé en ce que** le générateur destiné à générer une tension alternative haute fréquence ne présente pas de bobine montée en parallèle et l'inductance principale du coupleur rotatif (1) sert d'inductance du générateur.

8. Dispositif de soudure par ultrasons selon l'une quelconque des revendications 1 à 7, **caractérisé en ce que** l'élément fixe (2) et l'élément rotatif (3) présentent tous les deux une partie centrale, les tours (11) de la première bobine étant enroulés autour d'un premier axe d'enroulement sur la partie centrale de l'élément fixe (2), tandis que les tours (10) de la deuxième bobine sont enroulés autour d'un deuxième axe d'enroulement sur la partie centrale de l'élément rotatif (3), le premier et le deuxième axe d'enroulement formant un angle $\alpha$, qui est supérieur à 90°, de préférence supérieur à 150°, de manière particulièrement préférée supérieur à 170°, et sont idéalement identiques.

Fig. 1a

Fig. 1b

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100158307 A1
- EP 1157752 A2

- WO 2008156116 A1